# EUROPEAN PATENT SPECIFICATION

(11) **EP 1 382 257 B1**
(45) Date of publication and mention of the grant of the patent: **13.06.2007**
(21) Application number: 03250197.5
(22) Date of filing: 13.01.2003
(51) Int. Cl.: A21B 7/00

(54) **Improvements in and relating to bread makers**
Verbesserungen an Brotbackmaschinen
Améliorations apportées aux machines de fabrication de pain

(30) Priority: 19.07.2002 KR 2002042590
(43) Date of publication of application: 21.01.2004
(73) Proprietor: SAMSUNG ELECTRONICS CO., LTD., Suwon-City, Kyungki-do (KR)
(72) Inventor: Park, Jae-ryong, Paldal-ku, Suwon city, Kyungki-do (KR); Lee, Jong-wook, Suji-eup, Yongin city, Kyungki-do (KR); Lee, Tae-uk, Suwon city, Kyungki-do (KR); Sung, Han-jun, Paldal-ku, Suwon city, Kyungki-do (KR)
(74) Representative: Brandon, Paul Laurence

(56) References cited:
- US-A- 4 803 086
- US-A- 5 947 009
- NICHOLAS P. CHIRONIS: "Mechanisms, Linkages, and Mechanical Controls" 1965 , MCGRAW-HILL BOOK COMPANY , NEW YORK ETC. XP002259420 * page 85; figures PARALLEL-LINK,COUPLING *
- DATABASE WPI Section Ch, Week 200303 Derwent Publications Ltd., London, GB; Class D11, AN 2003-036595 XP002259421 & KR 2002 053 646 A (SAMSUNG ELECTRONICS CO LTD), 5 July 2002 (2002-07-05)

## Description

This application claims the benefit of Korean Application No. 2002-42590, filed July 19, 2002, in the Korean Intellectual Property Office.

The present invention relates to bread makers and to methods of transmitting rotary movement between kneading drums of a bread maker.

Generally, making bread is so complicated that it is difficult for an average person to make good bread at home. That is, making the bread is complicated because multiple steps are involved, including mixing raw materials such as flour, sugar, baking powder, etc. to form a dough; kneading the dough; leavening the dough; baking the dough; and so on.

Therefore, a bread maker has been developed that allows a user to easily make bread. The bread maker automatically performs the foregoing multiple steps and provides finished bread to the user.

For example, as shown in Figures 1 and 2, a bread maker disclosed in Korean Patent Application No. KR-A-2000-83355 includes a main body 100 divided into an oven compartment 110 and an electric component compartment 120, a door 300 in the front of the main body 100 to open and close the oven compartment 110, and a control panel (not shown) in the front of the electric component compartment 120 to allow a user to control the bread maker.

Inside the oven compartment 110, upper and lower kneading drums 111 and 113 are provided in parallel, onto which a bag (not shown) filled with raw materials for bread is attached and wound in clockwise and counterclockwise directions. The upper and lower kneading drums 111 and 113 have a plurality of projections 119 engaging a plurality of holes (not shown) in opposite ends of the bag.

Between the upper and lower kneading drums 111 and 113 is a baking tray 115 that contains the dough for baking. On the inside walls of the main body 100 and the door 300 are heaters 117 for heating the baking tray 115.

Beside the oven compartment 110 is the electric component compartment 120. Inside the electric component compartment 120 are a drum driving part 123, including a motor 123b incorporated with a gear reducer 123a to rotate the lower kneading drum 113 in clockwise and counterclockwise directions, and a belt 125 connecting the upper and lower kneading drums 111 and 113 to transmit a rotary movement from the lower kneading drum 113 to the upper kneading drum 111. The drum driving part 123 and the lower kneading drum 113 are connected by a coupler 121. Hence, the rotary movement of the drum driving part 123 is transmitted to the lower kneading drum 113, and the rotary movement of the lower kneading drum 113 is transmitted to the upper kneading drum 111 through the belt 125.

When the bag is attached to the upper and lower kneading drums 111 and 113 and the dough in the sealing bag is kneaded, the rotary movement is precisely transmitted from the lower kneading drum 113 to the upper kneading drum 111 in the ratio of 1:1 to prevent the bag from being split or loosened from the upper and lower kneading drums 111 and 113.

US-A-5 947 009 discloses an automatic baking apparatus for baking food products from dough having upper and lower holding devices to be affixed to either end of a flexible, sealable mixbag which mixbag contains ingredients for dough. A dough preparation and baking station having a slit at the top and bottom portions. Kneading devices for mechanically working the ingredients in the mixbag. Devices for creating relative reciprocating movement between the mixbag and the slit openings and heating means in at least a portion of the dough preparation and baking station so as to bake the kneaded ingredients. The kneading devices situated in the top and bottom portions of the apparatus, the top and bottom slits are each formed by a set of two adjacent members. Each member has a kneading surface defining the slit between each set and through which slit the mixbag passes. Each kneading surface being part of a support structure which is resilient and each support structure being attached to each respective member. At least one of the members being movable relative to the other member in each set.

However, in the conventional bread maker, the belt 125 employed for transmitting the rotary movement from the lower kneading drum 113 to the upper kneading drum 111 is likely to become elongated over time or as it is heated by the heaters 117.

It is an aim of preferred embodiments of the present invention to provide a bread maker in which a rotary movement is precisely transmitted from a lower kneading drum to an upper kneading drum even though the bread maker may be used for a long time.

According to the present invention in a first aspect there is provided, a bread maker having an oven compartment, kneading drums spacedly disposed in parallel inside the oven compartment, and a drum driving part rotating one of the kneading drums in clockwise and counterclockwise directions, characterised by: at least the lower kneading drum being an integrated member of the drum driving part; an upper and a lower wheel connected to the kneading drums and rotating therewith; link shafts eccentrically projecting from the wheels about each respective rotation axis thereof; and a connecting rod connecting the link shafts and transmitting a rotary movement between the kneading drums.

Preferably, the bread maker wherein each link shaft projects from a side end of each respective kneading drum, the connecting rod is formed with a shaft hole in the ends of the connecting rod, and each link shaft is rotatably inserted in the respective shaft holes.

Preferably, the bread maker wherein the kneading drums have a plurality of projections and a bag filled with ingredients for bread is attachable to the projections and wound in clockwise and counterclockwise directions.

Preferably, the bread maker The bread maker according to any preceding claim, wherein the drum driving part includes a motor and a gear reducer.

Preferably, the bread maker further comprises a coupler connecting the drum driving part to the kneading drum that is rotated by the drum driving part.

Preferably, the bread maker wherein the kneading drums comprise an upper kneading drum and a lower kneading drum, and a distance between a central axis of the upper kneading drum and the link shaft connected thereto is substantially the same as a distance between a central axis of the lower kneading drum and the link shaft connected thereto.

Preferably, the bread maker wherein the kneading drums comprise an upper kneading drum and a lower kneading drum, and a rotating position of the link shaft connected to the upper kneading drum corresponds to a rotating position of the link shaft connected to the lower kneading drum.

Preferably, the bread maker wherein the wheels comprise an upper wheel and a lower wheel, and a distance between a central axis of the upper wheel and the link shaft connected thereto is substantially the same as a distance between a central axis of the lower wheel and the link shaft connected thereto.

Preferably, the bread maker wherein the wheels comprise an upper wheel and a lower wheel, and a rotating position of the link shaft connected to the upper wheel corresponds to a rotating position of the link shaft connected to the lower wheel.

Preferably, the bread maker further comprising shaft holes formed in respective ends of each kneading drum into which respective ones of the link shafts are inserted.

Preferably, the bread maker wherein the bread maker further comprises a control panel in the main body to control the bread maker; an upper kneading drum and a lower kneading drum spacedly disposed in parallel inside the oven compartment, and having a plurality of projections onto which a mixing bag is attachable, the upper kneading drum and the lower kneading drum rotating to knead contents of the mixing bag; a baking tray between the upper kneading drum and the lower kneading drum receiving the kneaded contents of the mixing bag; heaters in the door and the oven compartment to heat the baking tray; and an electric component compartment having a drum driving part connected to one of the kneading drums to rotate the connected kneading drum in clockwise and counterclockwise directions.

Preferably, the bread maker wherein a distance between a central axis of the upper kneading drum and the link shaft connected thereto is substantially the same as a distance between a central axis of the lower kneading drum and the link shaft connected thereto.

Preferably, the bread maker wherein a rotating position of the link shaft connected to the upper kneading drum corresponds to a rotating position of the link shaft connected to the lower kneading drum.

According to the present invention in a second aspect there is provided, a method of transmitting a rotary movement between kneading drums of a bread maker, characterised by: providing at least a lower kneading drum as an integrated member of drum driving part of the bread maker; connecting a wheel to each kneading drum; projecting a link shaft from each wheel, each link shaft being eccentrically located on each respective wheel and rotating about a rotation axis of each respective kneading drum;; connecting the link shafts with a connecting rod; and rotating one of the kneading drums and transmitting a rotary movement from the rotating kneading drum to the other kneading drum through the connecting rod and the link shafts.

Preferably, the method wherein the kneading drums comprise an upper kneading drum and a lower kneading drum, and a distance between a central axis of the upper kneading drum and the link shaft connected thereto is substantially the same as a distance between a central axis of the lower kneading drum and the link shaft connected thereto.

Preferably, the method wherein the kneading drums comprise an upper kneading drum and a lower kneading drum, and a rotating position of the link shaft connected to the upper kneading drum corresponds to a rotating position of the link shaft connected to the lower kneading drum.

Preferably, the method further comprises connecting a wheel to each kneading drum; projecting a link shaft from each wheel, each link shaft being eccentrically located on each respective wheel and rotating about a rotation axis of each respective kneading drum; and connecting the link shafts with a connecting rod; and
rotating one of the kneading drums and transmitting a rotary movement from the rotating kneading drum to another kneading drum through the connecting rod and the wheels.

Preferably, the method wherein the wheels comprise an upper wheel and a lower wheel, and a distance between a central axis of the upper wheel and the link shaft connected thereto is substantially the same as a distance between a central axis of the lower wheel and the link shaft connected thereto.

Preferably, the method wherein the wheels comprise an upper wheel and a lower wheel, and a rotating position of the link shaft connected to the upper wheel corresponds to a rotating position of the link shaft connected to the lower wheel.

Additional features of the present invention are set out in the appended claims.

The present invention will become apparent and more readily appreciated from the following description of the embodiments, by way of example only, taken in conjunction with the accompany drawings, of which:

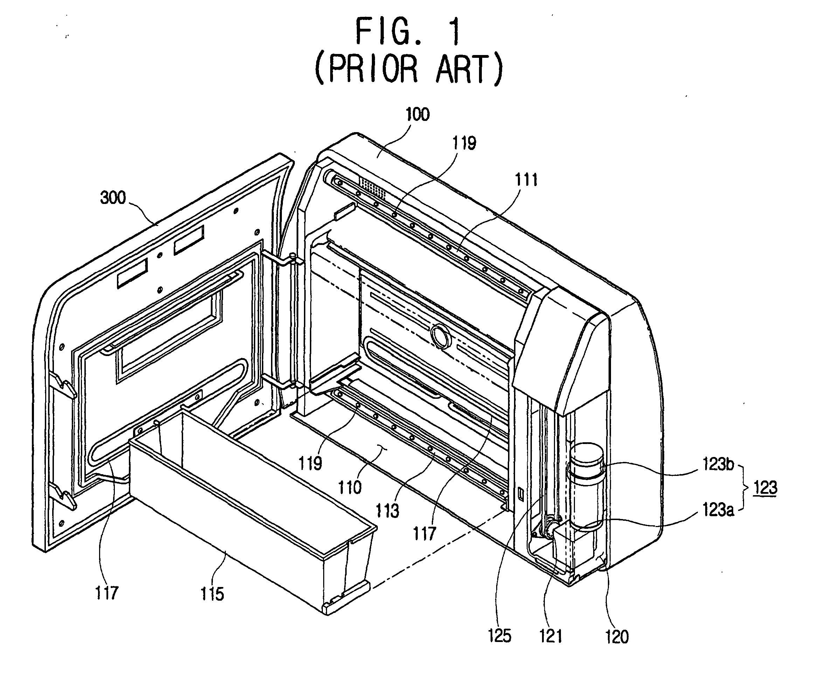

Figure 1 is a perspective view of a conventional bread maker;

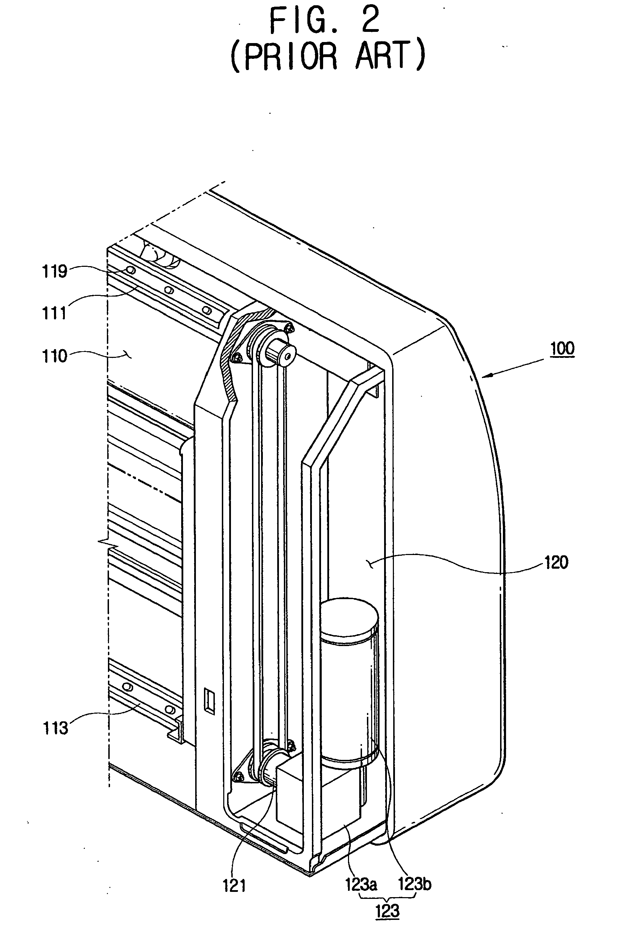

Figure 2 is an enlarged perspective view of a component compartment of the conventional bread maker shown in Figure 1;
Figure 3 is a perspective view of a bread maker according to a first embodiment of the present invention;
Figure 4 is a front sectional view of the bread maker according to the first embodiment of the present invention shown in Figure 3;
Figure 5 is a side sectional view of the bread maker according to the first embodiment of the present invention shown in Figure 3; and
Figure 6 is a front sectional view of a bread maker according to a second embodiment of the present invention.

Hereinafter, embodiments of the present invention will be described in detail with reference to the attached drawings, wherein the like reference numerals refer to the like elements throughout. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

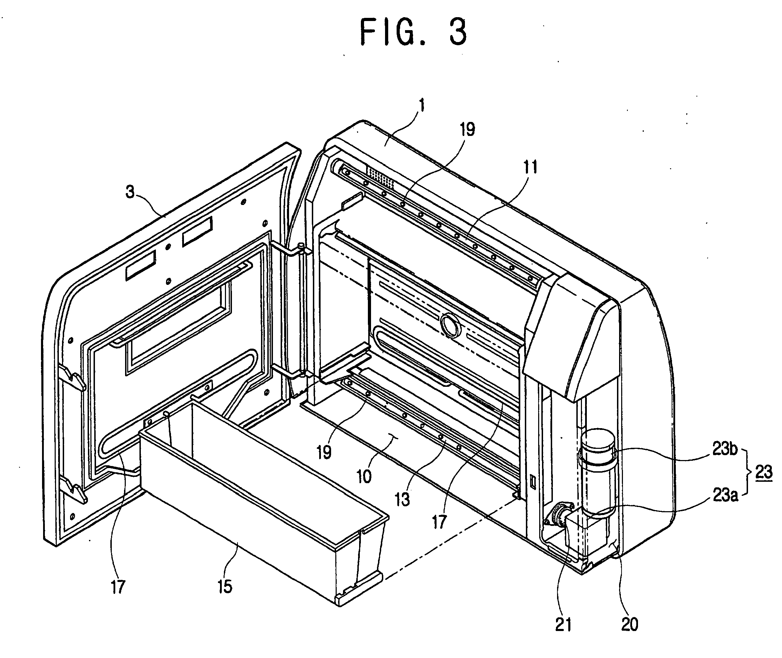

As shown in Figure 3, a bread maker according to a first embodiment of the present invention includes a main body 1 with an oven compartment 10, a door 3 in the front of the main body 1 to open and close the oven compartment 10, and a control panel (not shown) in a front side of the main body 1 to allow a user to control the bread maker.

Inside the oven compartment 10, upper and lower kneading drums 11 and 13 are provided in parallel, onto which a bag (not shown) filled with raw materials for bread is attached and wound in clockwise and counterclockwise directions. The upper and lower kneading drums 11 and 13 are both provided with a plurality of projections 19 engaging a plurality of holes (not shown) in opposite ends of the bag.

Between the upper and lower kneading drums 11 and 13 is a baking tray 15 that contains the dough for baking. On the inside walls of the main body 1 and the door 3 are heaters 17 for heating the baking tray 15.

Beside the oven compartment 10 is an electric component compartment 20. Inside the electric component compartment 20 is a drum driving part 23, including a motor 23b incorporated with a gear reducer 23a to rotate the lower kneading drum 13 in clockwise and counterclockwise directions. The drum driving part 23 is connected to one side of the lower kneading drum 13 by a coupler 21.

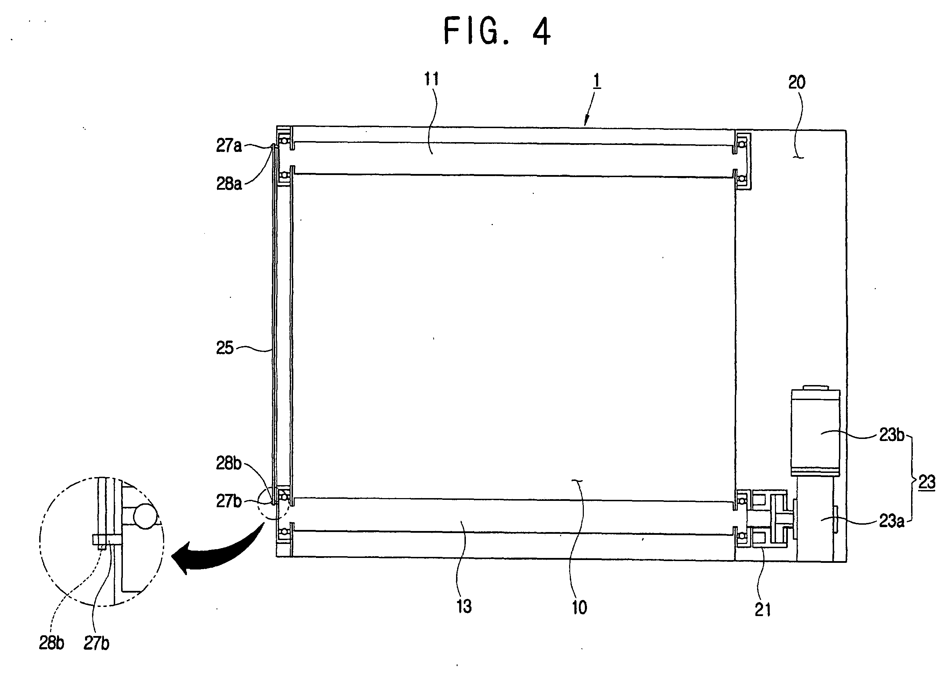

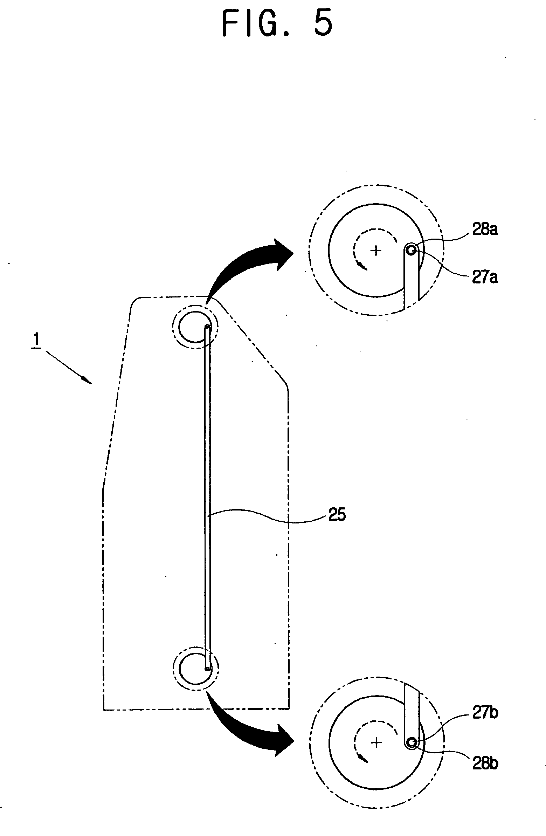

Referring to Figures 4 and 5, in the sides of the upper and lower kneading drums 11 and 13 opposite the electric component compartment 20, upper and lower link shafts 27a and 27b are eccentrically provided about each rotation axis of the upper and lower kneading drums 11 and 13, respectively. The upper and lower link shafts 27a and 27b are connected by a connecting rod 25.

The distance between the central axis of the upper kneading drum 11 and the upper link shaft 27a is equal to the distance between the central axis of the lower kneading drum 13 and the lower link shaft 27b. The rotating position of the upper link shaft 27a in the upper kneading drum 11 corresponds to the rotating position of the lower link shaft 27b in the lower kneading drum 13, as shown in Figure 5.

In opposite ends of the connecting rod 25 are shaft holes 28a and 28b to which the upper and lower link shafts 27a and 27b are rotatably inserted.

Referring to Figure 5, as the motor 23b rotates the lower kneading drum 13, the rotary movement is transferred from the lower kneading drum 13 through the connecting rod 25 to the upper kneading drum 11, so that the upper kneading drum 11 and the lower kneading drum 13 rotate together.

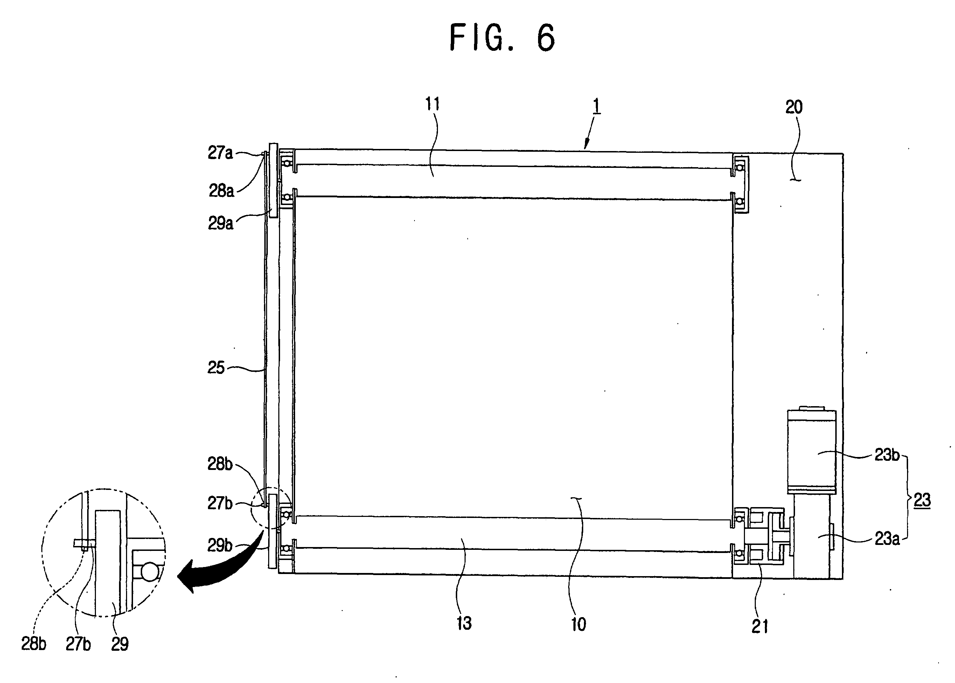

According to a second embodiment of the present invention as shown in Figure 6, the upper and lower kneading drums 11 and 13 have wheels 29a and 29b attached, respectively. Upper and lower link shafts 27a and 27b are eccentrically provided on the respective wheels 29a and 29b about each rotation axis thereof. Thus, the upper and lower kneading drums 11 and 13 are part of a gear structure 27 that is not limited by a small radii of the upper and lower kneading drums 11 and 13.

In the foregoing embodiments, the upper and lower link shafts 27a and 27b are provided in the upper and lower kneading drums 11 and 13, and the shaft holes 28a and 28b are formed on the connecting rod 25. However, the upper and lower link shafts 27a and 27b may be provided in the connecting rod 25, and the shaft holes 28a and 28b may be formed on the upper and lower kneading drums 11 and 13.

As described above, the upper and lower kneading drums 11 and 13 are connected by the connecting rod 25, which does not deteriorate due to extended use and heat from the heaters 17. Thus, the rotary movement is precisely transmitted from the lower kneading drum 13 to the upper kneading drum 11.

As described above, preferred embodiments of the present invention provide a bread maker in which a rotary movement is precisely transmitted from a lower kneading drum to an upper kneading drum.

Although a few embodiments of the present invention have been shown and described, it will be appreciated by those skilled in the art that changes may be made in these embodiments without departing from the principles and spirit of the invention, the scope of which is defined in the appended claims.

## Claims

1. A bread maker having an oven compartment (10), kneading drums (11, 13) spacedly disposed in parallel inside the oven compartment (10), and a drum driving part (23) rotating one of the kneading drums (11, 13) in clockwise and counterclockwise directions, **characterised by**:
at least the lower kneading drum (13) being an integrated member of the drum driving part (23);
an upper and a lower wheel (29a, 29b) connected to the kneading drums (11, 13) and rotating therewith;
link shafts (27a, 27b) eccentrically projecting from the wheels (29a, 29b)about each respective rotation axis thereof; and
a connecting rod (25) connecting the link shafts (27a, 27b) and transmitting a rotary movement between the kneading drums (11, 13).

2. The bread maker according to claim 1, wherein each link shaft (27a, 27b) projects from a side end of each respective kneading drum (11, 13), the connecting rod (25) is formed with a shaft hole (28a, 28b) in the ends of the connecting rod (25), and each link shaft (27a, 27b) is rotatably inserted in the respective shaft holes (28a, 28b).

3. The bread maker according to any preceding claim, wherein the kneading drums (11, 13) have a plurality of projections (19) and a bag filled with ingredients for bread is attachable to the projections and wound in clockwise and counterclockwise directions.

4. The bread maker according to any preceding claim, wherein the drum driving part (23) includes a motor (23b) and a gear reducer (23a).

5. The bread maker according to any preceding claim, further comprising a coupler (21) connecting the drum driving part (23) to the kneading drum (11, 13) that is rotated by the drum driving part (23).

6. The bread maker according to any preceding claim, wherein the kneading drums (11, 13) comprise an upper kneading drum (11) and a lower kneading drum (13), and a distance between a central axis of the upper kneading drum (11) and the link shaft (27a) connected thereto is substantially the same as a distance between a central axis of the lower kneading drum (13) and the link shaft (27b) connected thereto.

7. The bread maker according to any preceding claim, wherein the kneading drums (11, 13) comprise an upper kneading drum (11) and a lower kneading drum (13), and a rotating position of the link shaft (27a) connected to the upper kneading drum (11) corresponds to a rotating position of the link shaft (27b) connected to the lower kneading drum (13).

8. The bread maker according to any preceding claim, wherein the wheels (29a, 29b) comprise an upper wheel (29a) and a lower wheel (29b), and a distance between a central axis of the upper wheel (29a) and the link shaft (27a) connected thereto is substantially the same as a distance between a central axis of the lower wheel (29b) and the link shaft (27b) connected thereto.

9. The bread maker according to any preceding claim, wherein the wheels (29a, 29b) comprise an upper wheel (29a) and a lower wheel (29b), and a rotating position of the link shaft (27a) connected to the upper wheel (29a) corresponds to a rotating position of the link shaft (27b) connected to the lower wheel (29b).

10. The bread maker according to any preceding claim, further comprising shaft holes (28a, 28b) formed in respective ends of each kneading drum (11, 13) into which respective ones of the link shafts (27a, 27b) are inserted.

11. The bread maker according to any preceding claim, wherein the bread maker further comprises:
a control panel in the main body (1) to control the bread maker;
an upper kneading drum (11) and a lower kneading drum (13) spacedly disposed in parallel inside the oven compartment (10), and having a plurality of projections (19) onto which a mixing bag is attachable, the upper kneading drum (11) and the lower kneading drum (13) rotating to knead contents of the mixing bag;
a baking tray (15) between the upper kneading drum (11) and the lower kneading drum (13) receiving the kneaded contents of the mixing bag;
heaters (17) in the door (3) and the oven compartment (10) to heat the baking tray (15); and
an electric component compartment (20) having a drum driving part (23) connected to one of the kneading drums (11, 13) to rotate the connected kneading drum (11, 13) in clockwise and counterclockwise directions.

12. The bread maker according to any preceding claim, wherein a distance between a central axis of the upper kneading drum (11) and the link shaft (27a) connected thereto is substantially the same as a distance between a central axis of the lower kneading drum (13) and the link shaft (27b) connected thereto.

13. The bread maker according to any preceding claim, wherein a rotating position of the link shaft (27a) connected to the upper kneading drum (11) corresponds to a rotating position of the link shaft (27b) connected to the lower kneading drum (13).

14. A method of transmitting a rotary movement between kneading drums (11, 13) of a bread maker, **characterised by**:
providing at least a lower kneading drum (13) as an integrated member of drum driving part (23) of the bread maker;
connecting a wheel (29a, 29b) to each kneading drum (11, 13);
projecting a link shaft (27a, 27b) from each wheel (29a, 29b), each link shaft (27a, 27b) being eccentrically located on each respective wheel (29a, 29b) and rotating about a rotation axis of each respective kneading drum (11, 13);
connecting the link shafts with a connecting rod (25); and
rotating one of the kneading drums (11, 13) and transmitting a rotary movement from the rotating kneading drum (11, 13) to the other kneading drum (13, 11) through the connecting rod (25) and the link shafts (27a, 27b).

15. The method according to claim 14, wherein the kneading drums (11, 13) comprise an upper kneading drum (11) and a lower kneading drum (13), and a distance between a central axis of the upper kneading drum (11) and the link shaft (27a) connected thereto is substantially the same as a distance between a central axis of the lower kneading drum (13) and the link shaft (27b) connected thereto.

16. The method according to claim 14, wherein the kneading drums (11, 13) comprise an upper kneading drum (11) and a lower kneading drum (13), and a rotating position of the link shaft (27a) connected to the upper kneading drum (11) corresponds to a rotating position of the link shaft (27b) connected to the lower kneading drum (13).

17. The method according to claim 14, wherein the wheels (29a, 29b) comprise an upper wheel (29a) and a lower wheel (29b), and a distance between a central axis of the upper wheel (29a) and the link shaft (27a) connected thereto is substantially the same as a distance between a central axis of the lower wheel (29b) and the link shaft (27b) connected thereto.

18. The method according to claim 14, wherein the wheels (29a, 29b) comprise an upper wheel (29a) and a lower wheel (29b), and a rotating position of the link shaft (27a) connected to the upper wheel (29a) corresponds to a rotating position of the link shaft (27b) connected to the lower wheel (29b).

## Patentansprüche

1. Brotbackmaschine mit einer Ofenkammer (10), Knettrommeln (11,13), die in gegenseitigem Abstand parallel im Innem der Ofenkammer (10) angeordnet sind, und einem Trommelantriebsteil (23), der einen der Knettrommeln (11,13) im Uhrzeigersinn und entgegen dem Uhrzeigersinn antreibt, **gekennzeichnet durch** folgende Merkmale:
wenigstens die untere Knettrommel (13) ist ein integrales Element des Trommelantriebsteils (23);
ein oberes und ein unteres Rad (29a,29b), die mit den Knettrommeln (11,23) verbunden sind und mit ihnen rotieren;
Verbindungszapfen (27a,27b), die exzentrisch von den Rädern (29a,29b) um jede entsprechende Drehachse derselben vorstehen; und
einen Verbindungsstab (25), der die Verbindungszapfen (27a,27b) miteinander verbindet und eine Drehbewegung zwischen den Knettrommeln (11,13) überträgt.

2. Brotbackmaschine nach Anspruch 1, bei der jeder Verbindungszapfen (27a,27b) von einem Seitenende einer jeden entsprechenden Knettrommel (11,13) vorsteht, der Verbindungsstab (25) mit einem Zapfenloch (28a,28b) in den Enden des Verbindungsstabes (25) versehen ist, und jeder Verbindungszapfen (27a,27b) drehbar in die entsprechenden Zapfenlöcher (28a,28b) eingesetzt ist.

3. Brotbackmaschine nach einem der vorhergehenden Ansprüche, bei der die Knettrommeln (11,13) mehrere Vorsprünge (19) aufweisen, und ein mit den Brotzutaten gefüllter Beutel an den Vorsprüngen anbringbar ist und im Uhrzeigersinn und entgegen dem Uhrzeigersinn gewickelt wird.

4. Brotbackmaschine nach einem der vorhergehenden Ansprüche, bei der der Trommelantriebsteil (23) einen Motor (23b) und ein Untersetzungsgetriebe (23a) enthält.

5. Brotbackmaschine nach einem der vorhergehenden Ansprüche, weiterhin enthaltend einen Koppler (21), der den Trommelantriebsteil (23) mit der Knettrommel (11,13) verbindet, die von dem Trommelantriebsteil (23) gedreht wird.

6. Brotbackmaschine nach einem der vorhergehenden Ansprüche, bei der die Knettrommeln (11,13) eine obere Knettrommel (11) und eine untere Knettrommel (13) umfassen und eine Distanz zwischen einer Mittenachse der oberen Knettrommel und dem mit dieser verbundenen Verbindungszapfen (27a) im Wesentlichen ebenso groß wie eine Distanz zwischen einer Mittenachse der unteren Knettrommel (13) und dem mit dieser verbundenen Verbindungszapfen (27b) ist.

7. Brotbackmaschine nach einem der vorhergehenden Ansprüche, bei der die Knettrommeln (11,13) eine obere Knettrommel (11) und eine untere Knettrommel (13) umfassen und eine Drehposition des mit der oberen Knettrommel (11) verbundenen Verbindungszapfens (27a) einer Drehposition des mit der unteren Knettrommel (13) verbundenen Verbindungszapfens (27b) entspricht.

8. Brotbackmaschine nach einem der vorhergehenden Ansprüche, bei der die Räder (29a,29b) ein oberes Rad (29a) und ein unteres Rad (29b) umfassen und eine Distanz zwischen einer Mittenachse des oberen Rades (29a) und des damit verbundenen Verbindungszapfens (27a) im Wesentlichen ebenso groß ist, wie eine Distanz zwischen einer Mittenachse des unteren Rades (29b) und des damit verbundenen Verbindungszapfens (27b).

9. Brotbackmaschine nach einem der vorhergehenden Ansprüche, bei der die Räder (29a,29b) ein oberes Rad (29a) und ein unteres Rad (29b) umfassen und eine Drehposition des mit dem oberen Rad (29a) verbundenen Verbindungszapfens (27a) einer Drehposition des mit dem unteren Rad (29b) verbundenen Verbindungszapfens (27b) entspricht.

10. Brotbackmaschine nach einem der vorhergehenden Ansprüche, weiterhin enthaltend Zapfenlöcher (28a,28b), die in entsprechenden Enden einer jeden Knettrommel (11,13) ausgebildet sind und in entsprechende derselben die Verbindungszapfen (27a,27b) eingesetzt sind.

11. Brotbackmaschine nach einem der vorhergehenden Ansprüche, weiterhin enthaltend:
ein Steuerfeld im Hauptkörper (1) zur Steuerung der Brotbackmaschine;
eine obere Knettrommel (11) und eine untere Knettrommel (13), die im Abstand zueinander parallel innerhalb der Ofenkammer (10) angeordnet sind und die mehrere Vorsprünge (19) aufweisen, an denen ein Mischbeutel anbringbar ist, wobei die obere Knettrommel (11) und die untere Knettrommel (13) drehen, um den Inhalt des Mischbeutels zu kneten;
eine Backform (15) zwischen der oberen Knettrommel (11) und der unteren Knettrommel (13) zur Aufnahme des gekneteten Inhalts des Mischbeutels;
Heizer (17) in der Tür (3) und der Ofenkammer (10) zum Erhitzen der Backform (15), und
ein Abteil (20) für elektrische Komponenten mit einem Trommelantriebsteil (23), der mit einer der Knettrommeln (11,13) verbunden ist, um die damit verbundene Knettrommel (11,13) im Uhrzeigersinn und entgegen dem Uhrzeigersinn zu drehen.

12. Brotbackmaschine nach einem der vorhergehenden Ansprüche, bei der eine Distanz zwischen einer Mittenachse der oberen Knettrommel (11) und des damit verbundenen Verbindungszapfens (27a) im Wesentlichen die gleiche ist, wie eine Distanz zwischen einer Mittenachse der unteren Knettrommel (13) und des damit verbundenen Verbindungszapfens (27b).

13. Brotbackmaschine nach einem der vorhergehenden Ansprüche, bei der eine Drehposition des Verbindungszapfens (27a), der mit der oberen Knettrommel (11) verbunden ist, einer Drehposition des Verbindungszapfens (27b), der mit der unteren Knettrommel (13) verbunden ist, entspricht.

14. Verfahren zum Übertragen einer Drehbewegung zwischen Knettrommeln (11,13) einer Brotbackmaschine, **gekennzeichnet durch**:
Bereitstellen wenigstens einer unteren Knettrommel (13) als ein integrales Element eines Trommelantriebsteils (23) der Brotbackmaschine;
Verbinden eines Rades (29a,29b) mit jeder Knettrommel (11,13);
Vorstehen eines Verbindungszapfens (27a,27b) von jedem Rad (29a,29b), wobei jeder Verbindungszapfen (27a,27b) exzentrisch auf jedem entsprechenden Rad (29a,29b) gelegen ist und um eine Drehachse einer jeden entsprechenden Knettrommel (11,13) rotiert;
Verbinden der Verbindungszapfen mit einem Verbindungsstab (25); und
Drehen einer der Knettrommeln (11,13) und Übertragen einer Drehbewegung von der drehenden Knettrommel (11,13) auf die andere Knettrommel (13,11) **durch** den Verbindungsstab (25) und die Verbindungszapfen (27a,27b).

15. Verfahren nach Anspruch 14, bei dem die Knettrommeln (11,13) eine obere Knettrommel (11) und eine untere Knettrommel (13) umfassen und eine Distanz zwischen einer Mittenachse der oberen Knettrommel (11) und des damit verbundenen Verbindungszapfens (27a) im Wesentlichen die gleiche wie eine Distanz zwischen einer Mittenachse der unteren Knettrommel (13) und des damit verbundenen Verbindungszapfens (27b) ist.

16. Verfahren nach Anspruch 14, bei der die Knettrommeln (11,13) eine obere Knettrommel (11) und eine untere Knettrommel (13) umfassen und eine Drehposition des Verbindungszapfens (27a), der mit der oberen Knettrommel (11) verbunden ist, einer Drehstellung des Verbindungszapfens (27b), der mit der unteren Knettrommel (13) verbunden ist, entspricht.

17. Verfahren nach Anspruch 14, bei dem die Räder (29a,29b) ein oberes Rad (29a) und ein unteres Rad (29b) umfassen und eine Distanz zwischen einer Mittenachse des oberen Rades (29a) und des damit verbundenen Verbindungszapfens (27a) im Wesentlichen die gleiche ist, wie eine Distanz zwischen einer Mittenachse des unteren Rades (29b) und des damit verbundenen Verbindungszapfens (27b).

18. Verfahren nach Anspruch 14, bei dem die Räder (29a,29b) ein oberes Rad (29a) und ein unteres Rad (29b) umfassen und eine Drehstellung des Verbindungszapfens (27a), der mit dem oberen Rad (29a) verbunden ist, einer Drehstellung des Verbindungszapfens (27b), der mit dem unteren Rad (29b) verbunden ist, entspricht.

## Revendications

1. Machine de fabrication de pain possédant un compartiment de four (10), des tambours de pétrissage (11, 13) disposés de façon espacée parallèlement à l'intérieur du compartiment de four (10), et une partie d'entraînement de tambour (23) faisant tourner l'un des tambours de pétrissage (11, 13) dans le sens horaire et dans le sens anti-horaire, **caractérisée en ce que** :
au moins le tambour de pétrissage inférieur (13) est un élément intégré de la partie d'entraînement de tambour (23) ;
des roues supérieure et inférieure (29a, 29b) sont raccordées aux tambours de pétrissage (11, 13) et tournent avec ceux-ci ;
des arbres de liaison (27a, 27b) se projettent de façon excentrique depuis les roues (29a, 29b) autour de chaque axe de rotation respectif de celles-ci ; et
une tige de raccordement (25) raccorder les arbres de liaison (27a, 27b) et transmet un déplacement rotatif entre les tambours de pétrissage (11, 13).

2. Machine de fabrication de pain selon la revendication 1, dans laquelle chaque arbre de liaison (27a, 27b) se projette depuis une extrémité latérale de chaque tambour de pétrissage respectif (11, 13), la tige de raccordement (25) est formée avec un trou d'arbre (28a, 28b) dans ses extrémités, et chaque arbre de liaison (27a, 27b) est inséré de manière rotative dans les trous d'arbre respectifs (28a, 28b).

3. Machine de fabrication de pain selon l'une quelconque des revendications précédentes, dans laquelle les tambours de pétrissage (11, 13) possèdent plusieurs protubérances (19) et un sac rempli d'ingrédients de fabrication du pain peut être attaché aux protubérances et enroulé dans le sens horaire et dans le sens anti-horaire.

4. Machine de fabrication de pain selon l'une quelconque des revendications précédentes, dans laquelle la partie d'entraînement de tambour (23) comprend un moteur (23b) et un réducteur de vitesse (23a).

5. Machine de fabrication de pain selon l'une quelconque des revendications précédentes, comprenant en outre un coupleur (21) raccordant la partie d'entraînement de tambour (23) au tambour de pétrissage (11, 13) qui tourne sous l'action de la partie d'entraînement de tambour (23).

6. Machine de fabrication de pain selon l'une quelconque des revendications précédentes, dans laquelle les tambours de pétrissage (11, 13) comprennent un tambour de pétrissage supérieur (11) et un tambour de pétrissage inférieur (13), et une distance entre un axe central du tambour de pétrissage supérieur (11) et l'arbre de liaison (27a) raccordé à celui-ci est sensiblement identique à une distance entre un axe central du tambour de pétrissage inférieur (13) et l'arbre de liaison (27b) raccordé à celui-ci

7. Machine de fabrication de pain selon l'une quelconque des revendications précédentes, dans laquelle les tambours de pétrissage (11, 13) comprennent un tambour de pétrissage supérieur (11) et un tambour de pétrissage inférieur (13), et une position de rotation de l'arbre de liaison (27a) raccordé au tambour de pétrissage supérieur (11) correspond à une position de rotation de l'arbre de liaison (27b) raccordé au tambour de pétrissage inférieur (13).

8. Machine de fabrication de pain selon l'une quelconque des revendications précédentes, dans laquelle les roues (29a, 29b) comprennent une roue supérieure (29a) et une roue inférieure (29b), et une distance entre un axe central de la roue supérieure (29a) et l'arbre de liaison (27a) raccordé à celle-ci est sensiblement identique à une distance entre un axe central de la roue inférieure (29b) et l'arbre de liaison (27b) raccordé à celle-ci

9. Machine de fabrication de pain selon l'une quelconque des revendications précédentes, dans laquelle les roues (29a, 29b) comprennent une roue supérieure (29a) et une roue inférieure (29b), et une position de rotation de l'arbre de liaison (27a) raccordé à la roue supérieure (29a) correspond à une position de rotation de l'arbre de liaison (27b) raccordé à la roue inférieure (29b).

10. Machine de fabrication de pain selon l'une quelconque des revendications précédentes, comprenant en outre des trous d'arbre (28a, 28b) formés dans les extrémités respectives de chaque tambour de pétrissage (11, 13) dans lesquels sont insérés les arbres de liaison (27a, 27b) respectifs.

11. Machine de fabrication de pain selon l'une quelconque des revendications précédentes, dans laquelle la machine de fabrication de pain comprend en outre :
un panneau de commande dans le corps principal (1) pour commander la machine de fabrication de pain ;
un tambour de pétrissage supérieur (11) et un tambour de pétrissage inférieur (13) disposés de façon espacée parallèlement à l'intérieur du compartiment de four (10), et possédant plusieurs protubérances (19) sur lesquelles peut être attaché un sac de mélange, le tambour de pétrissage supérieur (11) et le tambour de pétrissage inférieur (13) tournant pour pétrir le contenu du sac de mélange ;
un bac de cuisson (15) entre le tambour de pétrissage supérieur (11) et le tambour de pétrissage inférieur (13) recevant le contenu pétri du sac de mélange ;
des dispositifs de chauffage (17) dans la porte (3) et le compartiment de four (10) pour chauffer le bac de cuisson (15) ; et
un compartiment de composant électrique (20) ayant une partie d'entraînement de tambour (23) raccordé à l'un des tambours de pétrissage (11, 13) pour faire tourner le tambour de pétrissage raccordé (11, 13) dans le sens horaire et dans le sens anti-horaire.

12. Machine de fabrication de pain selon l'une quelconque des revendications précédentes, dans laquelle une distance entre un axe central du tambour de pétrissage supérieur (11) et l'arbre de liaison (27a) raccordé à celui-ci est sensiblement identique à une distance entre un axe central du tambour de pétrissage inférieur (13) et l'arbre de liaison (27b) raccordé à celui-ci

13. Machine de fabrication de pain selon l'une quelconque des revendications précédentes, dans laquelle une position de rotation de l'arbre de liaison (27a) raccordé au tambour de pétrissage supérieur (11) correspond à une position de rotation de l'arbre de liaison (27b) raccordé au tambour de pétrissage inférieur (13).

14. Procédé de transmission d'un déplacement rotatif entre des tambours de pétrissage (11, 13) d'une machine de fabrication de pain, **caractérisé par** :
le fait de prévoir au moins un tambour de pétrissage inférieur (13) en tant qu'élément intégré d'une partie d'entraînement de tambour (23) de la machine de fabrication de pain ;
le raccordement d'une roue (29a, 29b) à chaque tambour dé pétrissage (11, 13) ;
la projection d'un arbre de liaison (27a, 27b) depuis chaque roue (29a, 29b), chaque arbre de liaison (27a, 27b) étant situé de façon excentrique sur chaque roue respective (29a, 29b) et tournant autour d'un axe de rotation de chaque tambour de pétrissage respectif (11, 13) ;
la liaison des arbres de liaison à une tige de raccordement (25) ; et
la rotation d'un des tambours de pétrissage (11, 13) et la transmission d'un déplacement rotatif depuis le tambour de pétrissage (11, 13) en rotation à l'autre tambour de pétrissage (13, 11) par l'intermédiaire de la tige de raccordement (25) et des arbres de liaison (27a, 27b).

15. Procédé selon la revendication 14, dans lequel les tambours de pétrissage (11, 13) comprennent un tambour de pétrissage supérieur (11) et un tambour de pétrissage inférieur (13), et une distance entre un axe central du tambour de pétrissage supérieur (11) et l'arbre de liaison (27a) raccordé à celui-ci est sensiblement identique à une distance entre un axe central du tambour de pétrissage inférieur (13) et l'arbre de liaison (27b) raccordé à celui-ci

16. Procédé selon la revendication 14, dans lequel les tambours de pétrissage (11, 13) comprennent un tambour de pétrissage supérieur (11) et un tambour de pétrissage inférieur (13), et une position de rotation de l'arbre de liaison (27a) raccordé au tambour de pétrissage supérieur (11) correspond à une position de rotation de l'arbre de liaison (27b) raccordé au tambour de pétrissage inférieur (13).

17. Procédé selon la revendication 14, dans lequel les roues (29a, 29b) comprennent une roue supérieure (29a) et une roue inférieure (29b), et une distance entre un axe central de la roue supérieure (29a) et l'arbre de liaison (27a) raccordé à celle-ci est sensiblement identique à une distance entre un axe central de la roue inférieure (29b) et l'arbre de liaison (27b) raccordé à celle-ci

18. Procédé selon la revendication 14, dans lequel les roues (29a, 29b) comprennent une roue supérieure (29a) et une roue inférieure (29b), et une position de rotation de l'arbre de liaison (27a) raccordé à la roue supérieure (29a) correspond à une position de rotation de l'arbre de liaison (27b) raccordé à la roue inférieure (29b).
